# EUROPEAN PATENT APPLICATION

(11) **EP 4 640 393 A1**
(43) Date of publication of application: **29.10.2025**
(21) Application number: 25164466.2
(22) Date of filing: 18.03.2025
(51) Int. Cl.: B28D 1/22, C03B 33/10

(54) **TILE CUTTING MACHINE WITH IMPROVED MULTI-TOOL HOLDER**

(30) Priority: 23.04.2024 IT 202400009280
(71) Applicant: Brevetti Montolit S.P.A., 21050 Cantello (Varese) (IT)
(72) Inventor: MONTOLI, Vincenzo, 21050 CANTELLO (VA) (IT); CASARTELLI, Luigi, 21050 CANTELLO (VA) (IT)
(74) Representative: Faggioni, Carlo Maria

(57) **Abstract**

A manual tile cutting machine (1), comprising guiding and sliding means (4) on which a tool holder (6) is movably mounted, said tool holder being equipped with an engraving unit and having at least one lower end position is disclosed. In the machine the engraving unit is in the shape of a revolver magazine (9) mounted revolving on a centre (H) of axis of rotation carried by a housing portion (11) of said tool holder (6) and provided with a plurality of engraving wheels (10a, 10b, 10c) of different diameters, arranged on different radial directions exiting from said centre (H), and in which
each said engraving wheels (10a, 10b, 10c) has its own centre at a radial distance (a-c) from said centre (H) of the revolver magazine (9) inversely proportional to its own diameter, so that the lower edge of the engraving wheel (10a, 10b, 10c) is at a predetermined minimum height in relation to a horizontal reference plane (5) at said lower end position of the tool holder (6).

## Description

### FIELD OF THE INVENTION

The present invention relates to the field of machines used in the engraving of flat plates, such as tiles, stone material, glass or even other materials. In particular, the present invention relates to a tile cutting machine having a multi-tool holder.

### STATE OF PRIOR ART

In the sector of laying floor and wall tiles, but more generally of flat slabs, equipment is commonly used for the superficial engraving of materials. Among them, manual tile cutting machines are very common. They consist of a support base frame and a linear guide on which a hand-operated tool-holder device is sliding mounted. The actual engraving tool, typically in the form of a carbide wheel (e.g. widia^{™}), is mounted integral to the tool holder device, at its lower side. Traditionally, tool-holder devices have only one engraving tool, which can be changed depending on the material being engraved and the type of engraving the operator needs to perform. This forces operators to carry out cutting tool changes under different operating conditions. Changing the tool, although not overly complicated, requires several steps and is not always easy in the dusty environments of construction sites.

In the field of glass engraving, manual engraving devices have existed since time immemorial. They are equipped with an engraving head with a revolver magazine, which includes several engraving wheels, ready for use to replace those that gradually wear out.

The same Applicant disclosed in EP 3 892 430 a tool holder with a revolver magazine, used on a carriage of a linear guide to be attached to a plate to be engraved without the presence of any base frame. In this case, cutting/engraving wheels of different diameters are provided, which are also suitable for engraving different materials.

However, this application works well because the engraving machine has a rail guide that rests directly on the top surface of the plate to be engraved and the tool carriage is equipped with an elastic system that supports the revolver raised (on a raised resting surface) relative to the sliding surface, except during the application of pressure by the operator.

A direct application of this solution to a tile-cutting machine equipped with a fixed base frame and slide rail would entail several problems.

In particular, since the resting plane of the tool holder is defined in a fixed position in relation to the base frame, with the ideal working settings for a certain engraving wheel (which requires a distance of approximately 2 mm from the base frame), when using a larger diameter wheel, there is a risk of producing accidental impacts with the base frame and therefore compromising the integrity of the wheel. On the other hand, respecting a sufficient distance for wheels with a larger diameter would lead, for wheels having a smaller diameter, to ineffectiveness of the pressure exerted in the engraving operation.

There is therefore a need to modify the configuration of a tool holder with a revolver head or magazine so that it can also be conveniently used on a tool holder mounted on a tile-cutting machine with a guide attached to a base frame.

### PROBLEM AND SOLUTION

The problem behind the invention is therefore to propose a tile-cutting machine equipped with revolver multi-tool magazine that overcomes the aforementioned drawbacks.

This is achieved through the features mentioned in claim 1. Subordinate claims describe preferential features of the invention.

### BRIEF DESCRIPTION OF THE DRAWINGS

Further features and advantages of the invention will, however, be best illustrated by the following detailed description of a preferred embodiment, given purely as an example and not as a limitation, and illustrated in the accompanying drawings:
Fig. 1 is a side elevation view of a tile cutting machine according to the present invention;
fig. 2A is an enlarged side elevation view of the revolver magazine mounted on the tool holder;
Figs. 2B and 2C are side elevation views of the support base and magazine cover plate of Fig. 2A, respectively;
Figs. 3A, 3B, 3C are detail views of the tool holder with revolver magazine from Fig. 1 as it engages the home plane with three tools of different diameters; and
Figs. 4A and 5A are similar views to the one in Fig. 1, with parts removed, showing a comparison of the tool holder in two different positions, home and raised respectively; and
Figs. 4B and 5B are cross-sectional views taken along the F-F and G-G lines of Figs. 4A and 5A respectively.

### DETAILED DESCRIPTION OF A PREFERRED EMBODIMENT

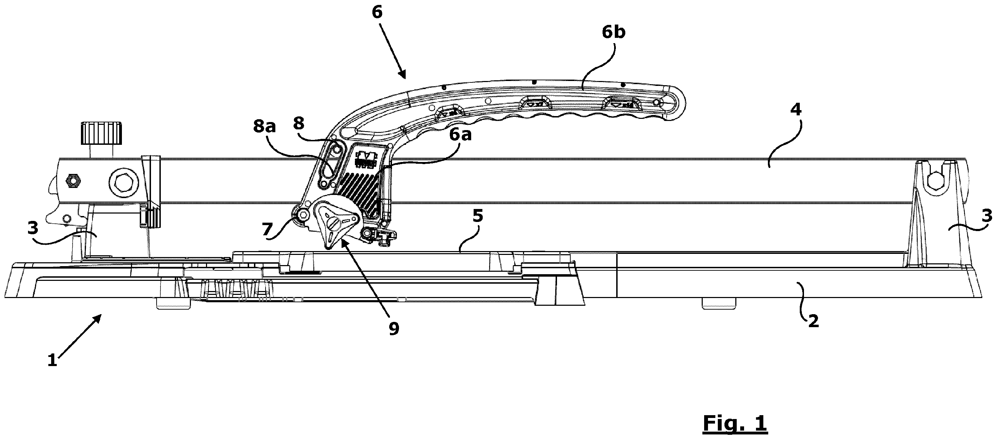

Referring to Fig. 1, there is shown a conventional tile cutting machine 1 equipped with a base frame. In particular, in a per se known manner, the machine 1 comprises a base frame 2 provided with two end posts 3 supporting a guide bar 4. The bedplate 2 is further provided with a floating support surface 5, which is normally formed by two plates juxtaposed by the two sides of a rigid longitudinal rib. The guide bar 4 provides adequate support and guidance to a tool holder 6, formed in a per se manner known by a main body 6a - mounted sliding on the guide bar 4 - from which a handle 6b protrudes above the guide bar 4.

In its lower part, below the guide bar 4, the main body 6a of the tool holder 6 carries a engraving means, typically consisting of a circular wheel of hard material with a sharp edge. In many cases, the engraving wheel is swivel-mounted on a removable pin, so that it can be replaced.

The main body 6a has a through pocket, by which it is guided on the bar 4, and is provided with a lower sliding bearing 7, intended to slide in contrast to the lower edge of the bar 4 during the engraving phase, so as to act as a fulcrum for applying pressure to the engraving means. The tool holder 6 is also provided with an upper floating bearing 8, intended to slide on the upper edge of the bar 4 and mounted oscillating in a slot 8a by means of elastic biasing means (not visible in the figures) which partially support the weight of the tool holder.

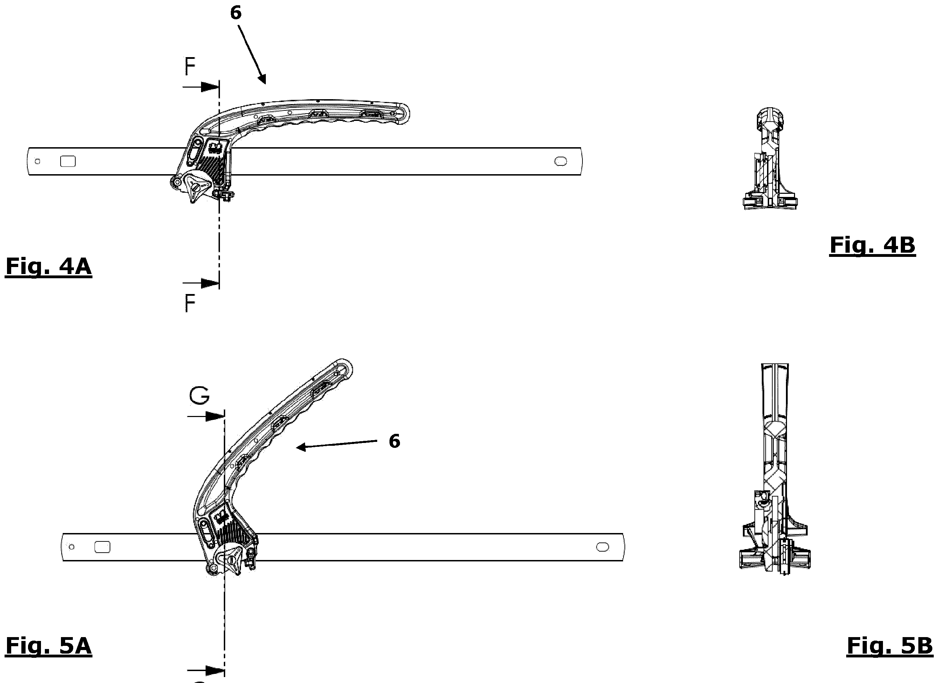

Typically, the tool holder 6 is mounted with a large clearance on the guide bar 4 and can switch between a fully raised position (e.g. fig. 5A) to a fully lowered home position (fig. 4A), which determines its lower end position.

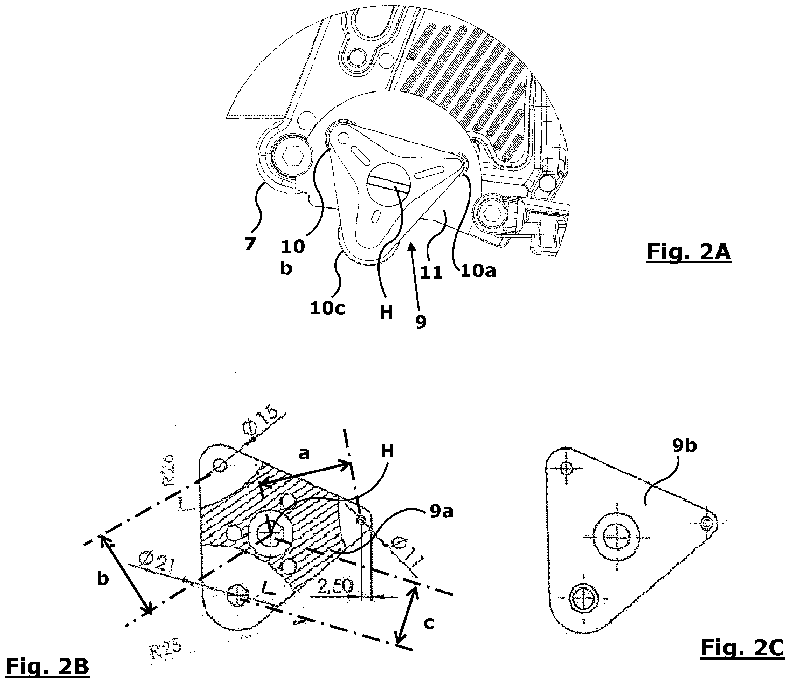

According to the invention, the engraving unit comprises a revolver magazine 9, analogous to that described in EP 3 892 430, rotatably mounted on a lower portion 11 of the tool holder 6 (as well depicted in Fig. 2A) and provided with a plurality of engraving means

From a constructional point of view, the revolver magazine 9 consists of a support base 9a on which are mounted rotating engraving wheels 10a, 10b, 10c each having a different diameter to the other. The engraving wheels are preferably three in number, as this has been found to be the best compromise for this application, but it is not excluded that there may be only two or more than three

The revolver magazine 9 is mounted swivelling on portion 11 around a central axis, orthogonal to the plane of the sheet of Figs. 2A-2C, identified at point H.

As shown in fig. 2B, each wheel is housed in a shallow seat of the support plate 9a. The size of diameters and radii of the housings, as shown in fig. 2B, are examplary.

Advantageously, the plurality of engraving means (the 10a-10c wheels) are of a different nature, i.e. they can have different diameters, but can also be of different material, thickness or clearance angle. It has been seen, in fact, that slabs of different materials and tenacity are engraved correctly by wheels of different natures: for example, a slab with a glassy surface is engraved better by a wheel with a larger diameter than one effective with a slab with a more porous surface.

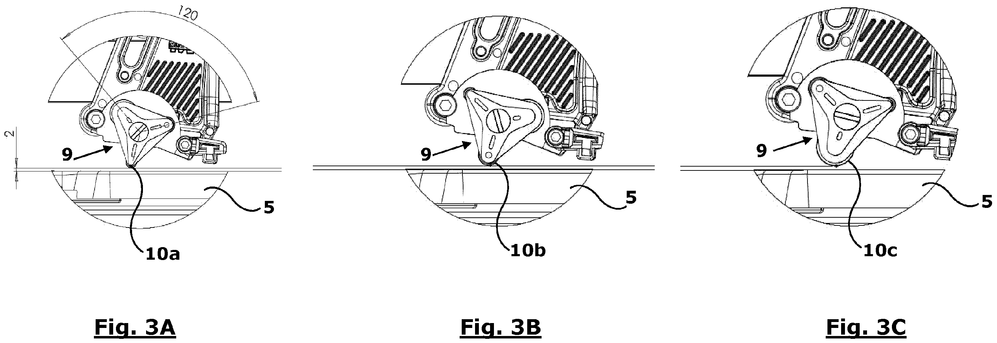

As can be seen in the figures, the engraving wheels 10a, 10b, 10c are arranged on radial direction lines angularly spaced apart and held in position by a cover plate 9b. Preferably the radial direction lines are equidistant from each other, for example 120° in the case of three wheels (see fig. 3A), but this angle is not strictly as such as will be shown later.

As well known per se, the support base 9a can take several stable angular positions on the portion 11 of the main body 6a of the tool holder 6, in the same number as the number of wheels, so that each cutting wheel can be alternately brought to the lower working position.

In accordance with an essential feature of the invention, the engraving wheels 10a, 10b, 10c are arranged on their radial lines in such a way that their centres (i.e. the centres of the circumferences circumscribing the wheels) are at a radial distance (a), (b) or (c) from the centre of rotation H of the revolver magazine which is different according to the diameter of each wheel. In particular, the radial distances a-c are inversely proportional to the size of the radius of the respective wheel: the wheel with the smallest diameter 10a is at a greater radial distance (a) than that (c) of the wheel with the largest diameter 10c.

These different radial distances can be obtained, as illustrated in fig. 2B, by mounting locating pins of the wheels 10a-10c at different fixed distances from the centre H of the support base 9a. Alternatively, according to a variant not illustrated, the pins of the wheels 10a-10c can be fixed at equivalent radial distances with respect to a reference point of the support base 9a, but the latter is mounted in rotation on the tool holder 6 by means of an eccentric shaft with respect to the reference point or on a cam component. Also in this case, in the various working positions taken by the engraving wheels, the centre of the wheels ends up in positions radially spaced differently from the axis of rotation of the revolving magazine.

The differentiated radial distances a-c are reflected in a differentiated elevation of the corresponding wheel (or, better, of its centre) with respect to a horizontal reference plane: in this way, the lower lying plane reached by the lower edge of the wheel 10a-10c, when the tool-holder 6 is in its lower end position (fig. 4A), can be made to fall at a desired height with respect to a reference plane of the machine (for example the plane of support of the plates 5 or the lower plane of the machine). By suitably adjusting the radial distance a-c of each of the engraving wheels 10a-10c on the revolver magazine 9, it is possible to ensure that the lower edge of all the wheels ends at the same lower lying plane, for example at an elevation of 2 mm from the reference plane of the floating plates 5.

This advantageous result allows any engraving wheel of the revolver 9 to be placed at the ideal distance from the reference plane, in order to exert the correct engraving pressure on the various types of slabs/tiles to be engraved and to prevent the wheel from accidentally hitting the floating plates 5 (with the tool holder 6 lowered in fig. 4A), compromising its integrity.

Alternatively, or in combination with the feature indicated above, the stable angular position taken by the revolver magazine 9 on the toolholder 6, at each of the engraving wheels, may be different for each of the wheels. In this way, the radial line directions on which the individual engraving wheels are arranged, in the respective stable positions of the revolver magazine 9, form a different angle with respect to a horizontal plane: a proportionally different elevation of the engraving wheel is also determined with this solution.

With a combination of radial distance a-c and revolver magazine angle 9, the horizontal lever arm between the fulcrum bearing 7 and the point of application of the specific engraving wheel can also be determined in a desired manner for each engraving wheel, which can have an influence on both the operator's working ergonomics and the engraving effectiveness of the specific engraving wheel.

Figs. 3A-3C show a comparison of the various positions taken by the revolver magazine 9 with the respective engraving wheels 10a-10c selected and the tool holder 6 in the fully lowered position. It can be seen that each wheel 10a-10c remains at the same minimum elevation (in the example 2 mm) from the reference plane formed by the horizontal surface of the floating plates 5.

Figs. 4A and 4B show a comparison between the fully lowered and fully raised position of tool holder 6. Should an operator inadvertently drop tool holder 6 from the raised position - useful for engaging a splitting foot in its operating position - to the fully lowered position of its lower end-stop, the selected engraving wheel would still not drop below the set minimum elevation and any collision with the working surfaces of the base frame is thus avoided.

As is clear from the description above, the solution of the invention perfectly achieves the aims set out in the introduction.

The different radial distance with which the different engraving wheels are mounted on the revolver magazine, determines that the lower engraving edge of each wheel, for each position taken by the revolver magazine, is maintained at the desired height in relation to the reference plane, e.g. in relation to the base frame.

The possible provision of different angular positions of the revolver magazine contributes to the same purpose.

It is understood, however, that the invention is not to be considered limited to the particular embodiments illustrated above, which constitute only exemplary embodiments of it, but that several variants are possible, all within the reach of a person skilled in the art, without thereby going beyond the scope of protection of the invention itself, as defined by the following claims.

For example, the shape of the revolver magazine and the number of engraving means may also differ from those illustrated and described.

Moreover, although the innovative engraving unit has been illustrated with reference to a traditional tool-holder machine, in particular with a tool-holder provided with a "push" handle, it cannot be excluded that the teaching offered herein is advantageously applicable to other machines, including tile cutters without a support base, with a guide rail of the tool-holder resting directly on the plane of the slab to be engraved, for example like the model marketed by the Applicant itself under the trade mark FLASHLINE^{™}. Even in the latter case, it is possible to identify a lower end position of the tool holder, while the reference plane may coincide with the lower support surface of the linear guide of the tool holder.

## Claims

1. A manual tile cutting machine (1), comprising guiding and sliding means (4) on which a tool holder (6) is movably mounted, said tool holder (6) being equipped at the bottom with an engraving unit and having at least one lower end position, in which
said engraving unit is in the shape of a revolver magazine (9) mounted revolving on a centre (H) of axis of rotation carried by a housing portion (11) of said tool holder (6) and provided with a plurality of engraving wheels (10a, 10b, 10c) of different diameters, arranged on different radial directions exiting from said centre (H), **characterised by that**
each of said engraving wheels (10a, 10b, 10c) has its own centre at a radial distance (a-c) from said centre (H) of the revolver magazine (9) inversely proportional to its own diameter, so that the lower edge of the engraving wheel (10a, 10b, 10c) is at a predetermined minimum height in relation to a horizontal reference plane (5) at said lower end position of the tool holder (6).

2. The manual tile cutting machine (1) as in claim 1, wherein said revolver magazine (9) is rotatably mounted on said housing portion (11) of said tool holder (6) according to stable positions in which said radial directions take different angles with respect to a horizontal plane, proportional to the diameter of the corresponding engraving wheel (10a, 10b, 10c).

3. The manual tile cutting machine (1) as in claim 1 or 2, wherein
said guiding and sliding means are in the shape of a bar (4) mounted on uprights (3) extending from a base frame (2) of said machine, and in which
said tool holder (6) has a main portion (6a), below said bar (4), on which said housing portion (11) is provided, and a handle (6b) which extends above said bar (4) and in that
said horizontal reference plane coincides with a plane supporting floating plates (5) arranged on said base frame (2).

4. The manual tile cutting machine (1) as in claim 3, wherein said predetermined minimum height is in the range of 2 mm.

5. The manual tile cutting machine (1) as in claim 1 or 2, wherein
said guiding and sliding means are in the shape of a linear rail provided with support means directly in contact with a slab to be engraved.

6. The manual tile cutting machine (1) as in any one of the preceding claims, wherein said plurality of engraving wheels (10a, 10b, 10c) of different diameters are also of different material and/or have different thickness and/or clearance angle.
